# DEMANDE DE BREVET EUROPEEN

(11) **EP 3 594 880 A1**
(43) Date de publication de la demande: **15.01.2020**
(21) Numéro de dépôt: 19185314.2
(22) Date de dépôt: 09.07.2019
(51) Int. Cl.: G06Q 20/32, H04L 9/32, G06Q 20/40

(54) **PROCÉDÉ DE TRANSMISSION SÉCURISÉE DE DONNÉES CRYPTOGRAPHIQUES**

(30) Priorité: 09.07.2018 FR 1856278
(71) Demandeur: IDEMIA France, 92400 Courbevoie (FR)
(72) Inventeur: PORTERET, Cyril, 92400 Courbevoie (FR)
(74) Mandataire: Regimbeau

(57) **Abrégé**

L'invention concerne un procédé de transmission sécurisée de données entre deux dispositifs informatiques, un premier dispositif comprenant des moyens d'émission d'un signal analogique et un deuxième dispositif comprenant des moyens d'acquisition du signal analogique, le procédé comprenant des étapes, mises en oeuvre par le premier dispositif, de :
génération d'un premier signal analogique représentatif d'une première donnée cryptographique comprenant une clé de chiffrement,
émission du premier signal analogique via les moyens d'émission compris dans le premier dispositif, à destination des moyens d'acquisition compris dans le deuxième dispositif,
réception d'une deuxième donnée cryptographique depuis le deuxième dispositif, ladite deuxième donnée étant au moins en partie chiffrée à l'aide de la clé de chiffrement,
traitement de ladite deuxième donnée cryptographique en fonction de la première donnée cryptographique, comprenant un déchiffrement de ladite deuxième donnée.

## Description

### DOMAINE TECHNIQUE DE L'INVENTION ET ETAT DE LA TECHNIQUE

La présente invention se rapporte à la transmission hors ligne (« offline ») de données cryptographiques, dans un contexte d'échange de données sécurisées entre des dispositifs informatiques.
Cette invention trouve des applications avantageuses pour l'authentification sécurisée d'un utilisateur, ou pour le chiffrement de données sensibles.

Une variété de situations nécessite un échange sécurisé de données cryptographiques entre un dispositif vérifieur (considéré comme fiable, et potentiellement doté d'un accès à des données confidentielles) et un dispositif client, comme par exemple l'authentification d'un individu, ou le contrôle qu'un individu possède un titre électronique valide lui permettant d'utiliser un service. On peut encore citer la transmission chiffrée de données biométriques acquises par un capteur biométrique, le capteur devant préalablement s'authentifier.
Notamment, certains algorithmes cryptographiques connus reposent sur le partage d'une première donnée cryptographique entre le dispositif vérifieur et le dispositif client, préalable nécessaire pour que les deux dispositifs puissent exécuter ensuite les opérations qui constituent l'algorithme cryptographique.
Dans un contexte d'authentification sécurisée, on connaît des algorithmes « défi-réponse » où le dispositif vérifieur partage en premier lieu un défi avec le dispositif client. Le défi peut être un aléa généré à l'aide d'un générateur d'aléa (ou « Random Number Generator » selon la terminologie anglosaxonne courante) embarqué dans le dispositif vérifieur. Le dispositif client retourne une donnée calculée à partir de l'aléa et d'une clé secrète, qui permet de confirmer la connaissance par le dispositif client de la clé secrète, mais pas de remonter à ladite clé secrète.

Ainsi, même si cette donnée est interceptée, il est très difficile pour un attaquant de remonter à la clé secrète.
Le partage du défi par le dispositif vérifieur à destination du dispositif client nécessite toutefois qu'un canal de communication soit établi entre les deux dispositifs, typiquement via une connexion réseau sans fil : réseau Internet, 3G, 4G, NFC (« Near-Field Communication »), Bluetooth... Cela rend l'algorithme défi-réponse inadapté pour une authentification dans un contexte où la connexion réseau n'est pas disponible.
En outre, dans l'exemple précédent, il peut être plus aisé pour un attaquant de compromettre la clé secrète qui permet d'authentifier le dispositif client, s'il intercepte à la fois la transmission de l'aléa et la transmission de la donnée calculée à partir dudit aléa.

### PRESENTATION GENERALE DE L'INVENTION

Il existe donc un besoin pour un procédé de transmission sécurisée de données cryptographiques, telles qu'un aléa ou une clé publique, entre un dispositif vérifieur et un dispositif client, dans lequel le canal de communication établi entre les deux dispositifs pour la transmission ne nécessite pas une connexion réseau.
Il existe en outre un besoin pour un canal de communication entre les deux dispositifs qui soit très résistant aux attaques extérieures.
On recherche de manière préférentielle un procédé de transmission qui soit de mise en oeuvre simple et rapide, sans hypothèse particulière sur le niveau de sécurité du dispositif client qui peut être un téléphone intelligent ou « smartphone ». Des moyens ubiquitaires des téléphones, tels qu'un écran ou un appareil photographique, doivent suffire à implémenter le procédé de transmission du côté du client.

L'invention répond à ces besoins par la fourniture, selon un premier aspect, d'un procédé de transmission sécurisée hors ligne de données d'après la revendication 1.

Le procédé de l'invention fournit un niveau de sécurité très satisfaisant en comparaison des procédés connus, puisque la première donnée cryptographique est transmise sous la forme d'un signal analogique. Un attaquant devrait se trouver physiquement proche du dispositif client pour intercepter la première donnée cryptographique, ce qui le rendrait facilement repérable.
Un avantage additionnel du procédé de l'invention est que la transmission de la première donnée cryptographique peut être réalisée en l'absence de toute connexion réseau entre le dispositif vérifieur et le dispositif client.
Un autre avantage est de permettre l'envoi par le deuxième dispositif d'une donnée chiffrée à destination du premier dispositif, sans que les deux dispositifs n'aient échangé des clés, par exemple une paire clé publique/clé privée, préalablement à la transmission.

Des caractéristiques additionnelles et non-limitatives d'un procédé de transmission de données de l'invention sont les suivantes, prises seules ou en l'une quelconque de leurs combinaisons techniquement possibles :
- le procédé comprend une étape préliminaire de réception d'un signal de réveil depuis le deuxième dispositif ;
- l'étape (a) comprend la génération, par le processeur du premier dispositif, de la première donnée cryptographique ;
- la première donnée cryptographique comprend un nonce ;
- le premier dispositif dispose en outre d'une clé secrète, l'étape (d) de traitement comprenant la détermination d'une troisième donnée cryptographique à partir de la première donnée cryptographique et de la clé secrète, et la vérification que la deuxième donnée cryptographique correspond à ladite troisième donnée cryptographique, afin de vérifier que le deuxième dispositif dispose de la clé secrète.

Un procédé présentant cette dernière caractéristique est d'usage particulièrement avantageux dans un contexte d'authentification sécurisée, puisque la première donnée cryptographique (qui peut être un nonce) est communiquée simplement via le signal analogique, et la deuxième donnée cryptographique (déterminée par exemple à partir du nonce et de la clé secrète) ne permet pas de remonter à la clé secrète. Le niveau de sécurité concernant la clé secrète est donc très satisfaisant ;
- la clé de chiffrement est une clé publique associée à une clé privée, le déchiffrement de la deuxième donnée cryptographique étant réalisé par le premier dispositif à l'aide de la clé privée.
- la deuxième donnée cryptographique est un message, ledit message comprenant un cryptage d'un secret à l'aide de la clé publique, l'étape (d) de traitement comprenant le déchiffrement dudit secret.

Un procédé présentant cette dernière caractéristique est avantageusement utilisé pour le chiffrement de données sécurisées d'un message comportant un secret ;
- la réception (c) de la deuxième donnée cryptographique comprend la lecture, par des moyens d'acquisition de signal analogique compris dans le premier dispositif, d'un deuxième signal analogique représentatif de la deuxième donnée cryptographique, ledit deuxième signal analogique étant transmis par des moyens d'émission du signal analogique compris dans le deuxième dispositif.

Cette caractéristique est particulièrement avantageuse puisqu'à la fois la première donnée cryptographique et la deuxième cryptographique sont transmises via des signaux analogiques, ce qui accroît encore la sécurité ;
- le premier signal analogique est un premier signal lumineux,
les moyens d'émission d'un signal analogique du premier dispositif étant un afficheur, et les moyens d'acquisition du signal analogique du deuxième dispositif étant un imageur, ledit signal lumineux étant acquis par un imageur du premier dispositif,
le premier signal lumineux pouvant être un code « Quick Response » ou « QR Code », ou une stéganographie, ou un code-barres ;
- le premier dispositif et le deuxième dispositif sont des dispositifs mobiles, de préférence des téléphones intelligents dits « smartphones »
- la réception de la deuxième donnée cryptographique comprend la lecture d'un deuxième signal lumineux représentatif de la deuxième donnée cryptographique, ledit signal lumineux étant émis par un afficheur du deuxième dispositif,
le deuxième signal lumineux pouvant également être un code de l'un de ces types ;
- le premier signal analogique est un signal sonore,
les moyens d'émission d'un signal analogique du premier dispositif étant un transducteur électroacoustique, et les moyens d'acquisition du signal analogique du deuxième dispositif étant un microphone ;
- le deuxième signal analogique est un signal sonore,
les moyens d'émission d'un signal analogique du deuxième dispositif étant un transducteur électroacoustique, et les moyens d'acquisition du signal analogique du premier dispositif étant un microphone ;
- l'imageur du deuxième dispositif est situé sur une face avant du deuxième dispositif, ledit imageur étant de préférence un appareil photographique en mode autoportrait, les étapes du procédé étant exécutées alors que l'imageur du deuxième dispositif est face à l'afficheur du premier dispositif ;
- le procédé comprend une étape intermédiaire de lecture, par des moyens d'acquisition d'un signal analogique du premier dispositif, d'une quatrième donnée cryptographique comprise dans un signal de contrôle transmis par des moyens d'émission du signal analogique du deuxième dispositif, et une étape ultérieure de comparaison entre la quatrième donnée cryptographique et la première donnée cryptographique précédemment transmise, pour vérifier l'intégrité de la transmission de la première donnée cryptographique ;
- le procédé est mis en oeuvre en l'absence de connexion réseau entre le premier dispositif et le deuxième dispositif.

Selon un deuxième aspect, l'invention concerne un dispositif vérifieur d'après la revendication 11.

Un tel dispositif de l'invention peut comprendre en outre les caractéristiques additionnelles suivantes :
- le dispositif vérifieur comporte en outre un dispositif imageur, de préférence un appareil photographique en mode autoportrait ;
- les moyens d'émission de signal analogique comprennent un écran d'affichage ;
- le dispositif vérifieur est un téléphone intelligent ou « smartphone ».

L'invention vise selon un troisième aspect un système comprenant un dispositif vérifieur tel que défini précédemment, ainsi qu'un dispositif client, ledit dispositif client comprenant un processeur, une mémoire et des moyens d'acquisition d'un signal analogique, le processeur étant configuré pour obtenir à partir du premier signal analogique la première donnée cryptographique comprenant la clé de chiffrement, et étant configuré en outre pour générer et transmettre au premier dispositif une deuxième donnée cryptographique au moins en partie chiffrée à l'aide de la clé de chiffrement.
Un tel système peut notamment comprendre comme dispositif client un téléphone intelligent ou « smartphone ».
Un tel système peut être utilisé pour l'exécution d'un procédé selon l'invention tel que défini précédemment.

Selon un quatrième aspect et un cinquième aspect, l'invention concerne respectivement un produit programme d'ordinateur comprenant des instructions de code pour l'exécution d'un procédé de transmission sécurisée de données tel que défini ci-avant, et des moyens de stockage lisibles par ordinateur, sur lesquels sont préenregistrées des instructions de code pour l'exécution d'un tel procédé.

### PRESENTATION GENERALE DES FIGURES

D'autres caractéristiques, buts et avantages de l'invention ressortiront de la description qui suit, qui est purement illustrative et non limitative, accompagnée des dessins en annexe parmi lesquels :
la **Figure 1** est une vue schématique d'un système pouvant mettre en oeuvre un procédé selon l'invention ;
la **Figure 2** représente les étapes d'un procédé selon un premier mode de réalisation, dans le contexte d'un algorithme défi-réponse de type « Challenge-Handshake Authentication Protocol » ou CHAP;
la **Figure 3** représente les étapes d'un procédé selon un deuxième mode de réalisation, dans un contexte de chiffrement RSA de message.

### DESCRIPTION DETAILLEE DE MODES DE REALISATION PARTICULIERS

Les exemples qui suivent concernent l'application d'un procédé de transmission de données cryptographiques pour des problématiques d'authentification et/ou de chiffrement de données. On comprendra que l'invention pourrait toutefois être appliquée, avec les mêmes avantages, dans tout contexte nécessitant une transmission sécurisée d'une donnée cryptographique par un dispositif vérifieur, en vue de traitements ultérieurs entre ledit dispositif vérifieur et un dispositif client.

Par « donnée cryptographique » on entendra une donnée qui peut être manipulée par un processeur, et qui intervient dans un algorithme cryptographique. On peut citer comme exemples d'algorithmes cryptographiques des algorithmes de signature, de chiffrement de message, de hachage de données, d'authentification, etc.

Dans la suite, des éléments similaires des figures annexées seront désignés par un même signe de référence.

### Exemple d'architecture de système vérifieur-client

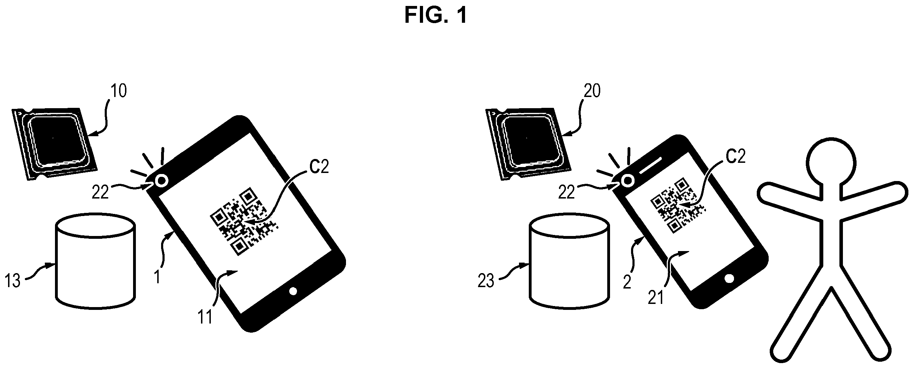

En référence à la **Figure 1****,** un système adapté pour la transmission de données sécurisées comprend un dispositif vérifieur 1, et un dispositif client, ou encore dispositif utilisateur, désigné par la référence 2.

Par « dispositif vérifieur » on entend un dispositif rattaché à une autorité de contrôle. Il peut s'agir d'un dispositif utilisé par un individu habilité à réaliser le contrôle, ou bien d'un dispositif autonome. De manière avantageuse, le dispositif vérifieur peut disposer d'un accès à des données permettant de contrôler l'identité d'individus, ou de contrôler leur appartenance à un groupe (par exemple, le groupe des personnes ayant une autorisation d'accès à une zone).
Par « dispositif utilisateur » on entend un dispositif détenu par un individu qui n'appartient pas à une autorité de contrôle, par exemple un smartphone ou une tablette.

Le dispositif vérifieur 1 peut être un dispositif mobile, comme un téléphone intelligent ou « smartphone », ayant ou non un accès au réseau Internet, ou encore une tablette portable. En alternative, le dispositif vérifieur 1 peut être un dispositif fixe tel qu'une borne.
Le dispositif 1 comprend des moyens de traitement de données 10, par exemple un processeur, et des moyens de stockage de données 13, comme une mémoire vive ou une mémoire morte.
Le dispositif 1 comprend en outre, de manière importante, des moyens 11 d'émission d'un signal analogique, par exemple un écran d'affichage, un flash, un vibreur, un transducteur électroacoustique (comme un haut-parleur).
Par « signal analogique », on entend un signal à variation continue qui correspond à un phénomène physique, qui n'est pas un signal numérique, et codant pour une information. Des exemples typiques de signaux analogiques sont les signaux lumineux (préférentiellement en lumière visible), ou les signaux vibratoires (préférentiellement acoustiques, i.e. les signaux sonores). En d'autres termes, le dispositif 1 est capable d'émettre un signal physique qui est perceptible par d'autres dispositifs, sans qui n'y ait nécessairement une transmission de données numériques. Le signal analogique code une information par une modulation temporelle ou spatiale d'une grandeur physique du signal, par exemple l'intensité ou la fréquence.

Optionnellement, le dispositif 1 comprend également des moyens 12 d'acquisition d'un signal analogique, qui correspondent par exemple au même type de signaux analogiques que ceux pouvant être émis par les moyens 11 d'émission, par exemple un dispositif imageur (comme une caméra ou un appareil photographique embarqué), un microphone, des accéléromètres.

Le dispositif vérifieur 1 dispose, en mémoire ou dans une base de données distante, d'un accès à des données permettant de réaliser des traitements cryptographiques, par exemple des informations de lien entre des utilisateurs et des clés secrètes d'authentification desdits utilisateurs, et/ou des clés de chiffrement de message.
Le dispositif 2 comprend des moyens de traitement de données 20, comme un processeur, et des moyens de stockage de données 23, comme une mémoire vive ou une mémoire morte, ainsi que des moyens 22 d'acquisition d'un signal analogique. Optionnellement, le dispositif 2 dispose aussi de moyens 21 d'émission d'un signal analogique.
On comprendra qu'avantageusement lors de la mise en oeuvre d'un procédé qui sera décrit dans la suite, les dispositifs 1 et 2 ne sont pas connectés, i.e. qu'aucune connexion réseau n'est établie entre eux.

Dans toute la suite, on traitera des exemples où les signaux analogiques que les dispositifs 1 et 2 sont aptes respectivement à émettre et à acquérir sont des signaux lumineux. Plus particulièrement, les moyens 11 correspondent à un écran d'affichage qui est configuré pour afficher des codes « Quick Response » désignés ci-après QR Codes, comme le QR Code C1 de la figure. Les moyens 22 correspondent à un appareil photographique situé sur la face avant du dispositif client 2, configuré pour prendre une photographie d'un QR Code affiché par le dispositif vérifieur 1. Cependant l'homme du métier saura transposer l'invention à d'autre sortes de signaux analogiques, par exemple des signaux sonores en particulier de type DTMF (« dual-tone multi-frequency ») communément appelé Fréquences Vocales.

Dans l'exemple de la Figure 1, le dispositif client 2 possède aussi un écran d'affichage 21 configuré pour afficher des QR Codes comme le code C2, et le dispositif vérifieur possède un appareil photographique 12 situé sur sa face avant. Les deux appareils photographiques 12 et 22 peuvent fonctionner en mode autoportrait, aussi dit « mode selfie » de sorte que les moyens 11 et 22 d'une part, et 12 et 21 d'autre part, se fassent simultanément face pour un échange interactif facile de signaux visuels.

### Cas de la transmission sécurisée de nonce, pour mettre en oeuvre une authentification sécurisée du client

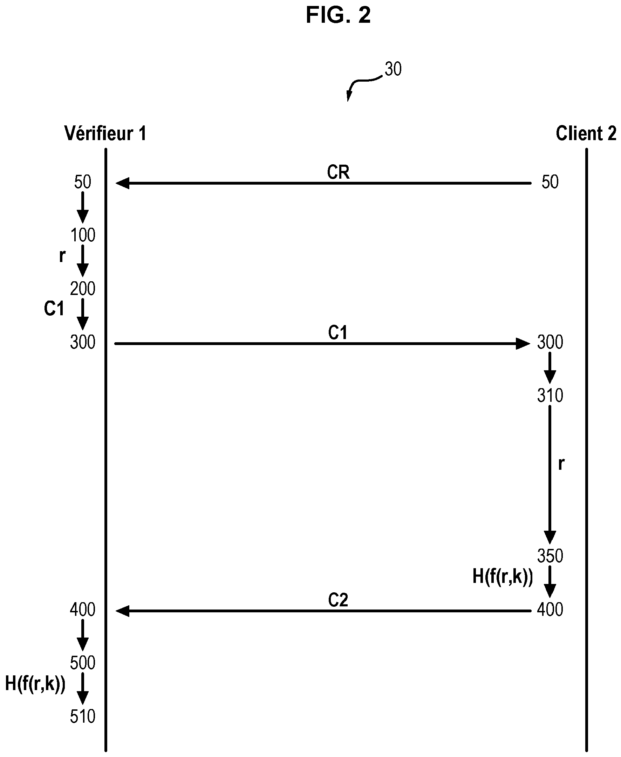

La **Figure 2** représente schématiquement des étapes d'un procédé 30 d'authentification du dispositif client 2 auprès du dispositif vérifieur 1. L'authentification est ici réalisée selon un protocole de type CHAP pour « Challenge-Handshake Authentification Protocol ».
Le principe, bien connu de l'homme du métier, de ce procédé d'authentification de type défi-réponse est le suivant. Le dispositif vérifieur 1 et le dispositif client 2 partagent d'abord une donnée *r* appelée « nonce » (i.e. un nombre arbitraire, c'est-à-dire un aléa à usage unique, de l'anglais « number used once »). L'usage d'un tel nombre arbitraire renforce grandement la sécurité du procédé, puisqu'une valeur différente et aléatoire de nonce est utilisée à chaque authentification, rendant difficiles des attaques par rejeu.
Par ailleurs, le dispositif vérifieur 1 connaît une clé privée k qui ne doit pas être transmise en clair, et veut vérifier la connaissance par le dispositif client 2 de cette clé privée *k*.
Au cours du protocole CHAP, le dispositif client 2 applique une fonction cryptographique f prédéterminée au nonce et à la clé privée, puis calcule un haché (de l'anglais « hash », également appelé « empreinte cryptographique ») du résultat donné par cette fonction f. Le dispositif vérifieur 1 applique de son côté la même fonction f au nonce et à la clé privée, puis calcule le haché à l'aide de la même fonction de hachage. L'authentification par le protocole CHAP du dispositif client 2 est considérée comme réussie lorsque la valeur de haché retournée par le dispositif client 2 et la valeur de haché calculée indépendamment par le dispositif vérifieur 1 sont égales.

Ici, un individu qui détient le dispositif client 2 souhaite s'authentifier auprès du dispositif vérifieur 1, pour prouver qu'il a préalablement acheté un ticket électronique qui est contenu dans la mémoire du dispositif 2. Par exemple, l'individu veut se rendre dans une salle de concert, et doit prouver à un vigile qui possède le dispositif vérifieur 1 qu'il est un acheteur authentique de ticket. On comprend qu'une salle de concert est typiquement un endroit où il peut être difficile de capter un réseau mobile de type 3G, et l'authentification « offline » prend tout son intérêt.
A cette fin, le procédé d'authentification 30 comprend les étapes suivantes.
A une étape optionnelle 50, le dispositif client 2 transmet au dispositif vérifieur 1 un signal de réveil CR. Ce signal peut être transmis sous forme numérique ou analogique. Le dispositif 2 émet ainsi une demande d'authentification auprès du dispositif vérifieur 1. Cette étape peut être omise, par exemple si le dispositif vérifieur 1 est à l'initiative de l'authentification.

### Transmission du nonce par signal analogique

Une première étape **(a)** comprend, de manière avantageuse, la génération 100 du nonce r par le dispositif vérifieur 1. Le dispositif 1 peut par exemple comprendre à cette fin un générateur aléatoire. Ce nonce r sert de base aux calculs ultérieurs.

Ensuite, au cours de l'étape (a), de manière importante, le dispositif vérifieur 1 réalise la génération 200, à partir du nonce r, d'un premier signal analogique noté C1. Dans le présent exemple, le signal analogique C1 est un code visuel sous forme de QR Code. Alternativement, le code C1 pourrait être un code visuel dans lequel la valeur du nonce r est dissimulée par stéganographie, ou bien un code à barres tel qu'un code EAN (« Electronic Article Number »).

Le signal analogique C1 peut, de manière plus générale, prendre la forme de tout signal physique perceptible par un capteur du dispositif client 2 lorsque le dispositif 2 est placé à une faible distance du dispositif vérifieur 1. Le signal C1 peut notamment être un signal sonore généré en fonction de la valeur du nonce r.

A une étape **(b),** le dispositif vérifieur 1 réalise la transmission 300 du signal analogique C1 au dispositif client 2, par l'intermédiaire des moyens d'émission 11, ici un afficheur. Le processeur 20 du dispositif 2 calcule ensuite, à une étape 310, la valeur de la première donnée cryptographique, ici le nonce r, à partir du premier signal analogique, ici le code visuel C1.

Les étapes (a) et (b) peuvent être exécutées consécutivement (le dispositif 1 calcule le QR Code C1 et l'affiche immédiatement), ou le QR Code C1 peut être sauvegardé en mémoire à l'issue de l'étape (a) et affiché plus tard.

Il est possible de prévoir à ce stade qu'un signal de contrôle, par exemple un QR Code, soit transmis par le dispositif client 2. Une fonction du signal de contrôle est de permettre une vérification par les dispositifs 1 et 2 que la première donnée cryptographique, ici le nonce r, a été correctement transmise à l'issue des étapes 200 et 300. Si le résultat de cette vérification est positif, le dispositif vérifieur 1 peut transmettre au dispositif client 2 un signal de confirmation « OK » que le procédé d'authentification 30 peut se poursuivre.

### Authentification du dispositif client à partir de la valeur du nonce

Le procédé 30 se poursuit par une étape **(c)** au cours de laquelle le dispositif client 2 effectue un calcul 350 d'une deuxième donnée cryptographique D nécessaire à son authentification.
Le dispositif client 2 disposant de la valeur du nonce r, il est en mesure de calculer la deuxième donnée cryptographique D. Dans le présent exemple, le dispositif client 2 applique une fonction cryptographique quelconque f prenant en entrée d'une part le nonce r, et d'autre part la clé privée k dont le procédé 30 contrôle la connaissance par le dispositif 2. La fonction f a été préalablement partagée entre les dispositifs 1 et 2. Par exemple, la fonction f peut être une simple addition, auquel cas *f(r,k)* = *r*+*k.* Le cas échéant, la fonction f peut être une fonction plus complexe, pour renforcer le niveau de sécurité de l'algorithme. Ensuite, le dispositif client 2 calcule le haché de *f(r,k)* à l'aide de la fonction de hachage H également partagée entre les dispositifs 1 et 2. Dans le présent exemple, on a *D* = *H(f(r,k)).*
Le dispositif client 2 réalise ensuite la transmission 400 au dispositif vérifieur 1 de la deuxième donnée cryptographique D, cette donnée D étant ici le haché *H(f(r,k)).*
La transmission de la deuxième donnée cryptographique D peut être réalisée par l'intermédiaire d'un un deuxième signal analogique C2 représentatif de la valeur *H(f(r,k))* (émis par des moyens d'émission 21 du dispositif 2, et acquis par des moyens d'acquisition 12 de signal analogique). En alternative, la deuxième donnée cryptographique D peut être transmise par des moyens standard, par exemple via une connexion réseau Internet, Bluetooth ou NFC.
Afin de vérifier la validité de l'authentification du côté du dispositif 1, il convient que le dispositif 1 calcule lui-même la valeur attendue pour la deuxième donnée cryptographique, ici la valeur *H(f(r,k)),* en fonction de la valeur de la clé privée k et à l'aide des fonctions H et f.
A ce titre, le dispositif vérifieur 1 met en oeuvre une étape **(d)** de traitement cryptographique, ici en vue de l'authentification, comprenant la génération 500 d'une troisième donnée cryptographique qui correspond à la valeur attendue de *H(f(r,k)).*
Il est à noter que l'étape 500 pourrait être exécutée avant l'étape 350, ou en même temps que l'étape 350.
Le dispositif 1 réalise ensuite une vérification 510 qu'il y a identité entre la valeur attendue de *H(f(r,k))* et la valeur reçue de la part du dispositif client 2 lors de l'étape (c).
Si cette vérification est positive, le dispositif client 2 a prouvé qu'il connaît la clé k et le détenteur du dispositif 2 est valablement authentifié.

Le procédé 30 présente de nombreux avantages.

Pour intercepter la transmission du nonce, un attaquant devrait acquérir une image du QR Code ; or, de manière préférentielle, cette image n'est pas transmise via un réseau de communication. La sécurité de la transmission est donc améliorée.
En outre, le procédé 30 ne nécessite pas qu'une connexion soit établie entre le dispositif vérifieur 1 et le dispositif client 2, telle qu'une connexion NFC, Bluetooth, Internet, 4G, etc. Le procédé 30 présente l'avantage additionnel d'exploiter des outils très répandus des smartphones : un appareil photographique, un écran, un processeur. Le procédé 30 est donc facilement utilisable, même dans des environnements où la couverture réseau n'est pas uniformément bonne, comme les salles de concert ou les transports souterrains.

Selon un exemple alternatif de réalisation du procédé 30, l'authentification du dispositif client 2 pourrait être réalisée par la mise en oeuvre d'un algorithme de signature numérique de type DSA (« Digital Signature Algorithm »), lors de la transmission d'un message M.
Dans ce contexte, la signature DSA permet non seulement d'authentifier le dispositif client 2, mais aussi de prouver l'intégrité du message M.
De manière avantageuse, le message M est un message qui peut être transmis en clair, mais dont il est important d'établir qu'il n'a pas été falsifié. Le message M peut par exemple être un document d'identité d'un utilisateur du dispositif client 2.
Le procédé selon cet exemple alternatif comprend alors la transmission, conjointement au message M, d'un couple *(s1, s2)* de signature DSA dont les valeurs dépendent d'un haché H(M), du nonce r et de la clé privée k dont on souhaite vérifier la connaissance par le dispositif client 2. Le calcul de la signature DSA est connu et n'est pas détaillé ici.
Si le dispositif vérifieur 1, qui réalise de son côté le calcul du couple *(s1*, *s2)* obtient des valeurs semblables à celles reçues avec le message M de la part du dispositif client 2, alors le dispositif client 2 est valablement authentifié.

### Cas de la transmission sécurisée de clé de chiffrement RSA

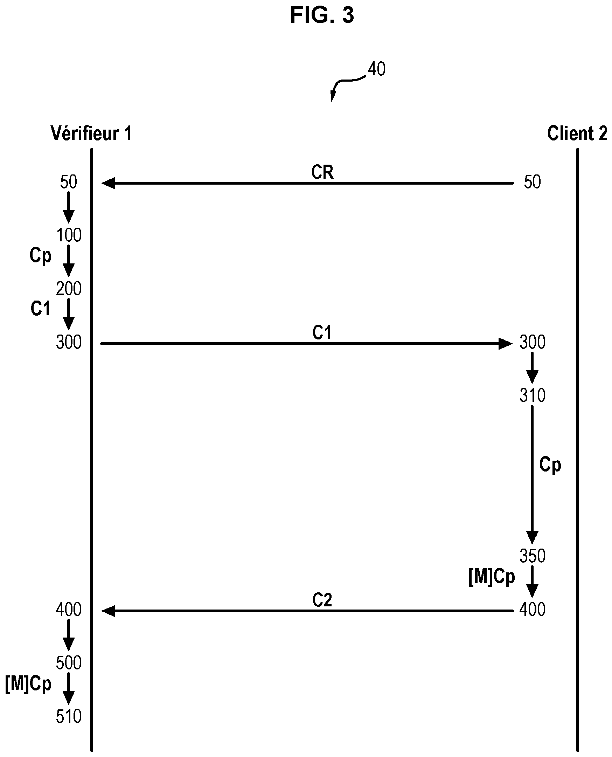

La **Figure 3** représente schématiquement des étapes d'un procédé 40 de communication d'un message M que le dispositif client 2 souhaite transmettre de manière sécurisée au dispositif vérifieur 1.
Le procédé 40 comprend l'exécution entre les dispositifs 1 et 2 d'un algorithme de cryptographie asymétrique, typiquement un algorithme de chiffrement RSA (pour « Rivest, Shamir, Adelman »). L'algorithme RSA est bien connu de l'homme du métier et ne sera pas décrit dans le détail ici. Le dispositif vérifieur 1 dispose d'une clé privée Ck de déchiffrement, associée à une clé publique Cp de chiffrement, la clé privée Ck permettant de déchiffrer les messages cryptés à l'aide de la clé publique Cp. La clé publique Cp et la clé privée Ck sont construites de sorte qu'il soit très difficile pour un attaquant de remonter à la valeur de la clé privée Ck à partir de la valeur de la clé publique Cp.
Le procédé de transmission sécurisée de données de l'invention trouve une application avantageuse pour la transmission de la clé publique Cp entre les dispositifs 1 et 2.

Le procédé 40 comprend les étapes suivantes. Les variantes des étapes du procédé 30 décrites ci-avant en relation à la Figure 2 s'appliquent également aux étapes correspondantes du procédé 40.
A une étape optionnelle 50, le dispositif client 2 transmet un signal de réveil CR au dispositif 1 pour initier la transmission de la clé publique. Ensuite, une étape (a) comprend de façon avantageuse la génération 100 par le dispositif vérifieur 1 d'une clé privée Ck et d'une clé publique Cp, selon l'algorithme RSA.
La clé publique Cp constitue une première donnée cryptographique que le dispositif 1 doit transmettre de manière sécurisée.
On notera qu'il n'est pas nécessaire que les deux dispositifs 1 et 2 aient échangé des clés, par exemple une paire clé publique/clé privée, préalablement à la transmission.
L'étape (a) comprend la génération 200, par le dispositif 1, d'un QR Code C1 à partir de la valeur de la clé publique Cp. Une étape subséquente (b) comprend l'affichage 300 dudit QR Code C1 par l'intermédiaire de l'afficheur 11.
En alternative, la clé générée à l'étape 200 et transmise à l'étape 300 est une clé de chiffrement symétrique.
A l'étape 310, le dispositif client 2 récupère, à partir du QR Code C1 pris en photographie, la valeur de la clé publique Cp et enregistre cette valeur dans la mémoire 23. De manière optionnelle, un signal de contrôle est échangé pour vérifier l'intégrité de la transmission.
Si l'éventuelle vérification s'avère positive, le dispositif client 2 réalise à l'étape 350' le chiffrement d'un message M contenant un secret, à l'aide de la clé publique Cp. Le message M peut avoir un contenu sensible, ou contenir des données confidentielles telles que des données biométriques d'individus, ou des documents d'identité. On note [M]Cp le message M crypté à l'aide de la clé publique Cp précédemment transmise. Ce message crypté [M]Cp constitue la deuxième donnée cryptographique.
Une étape (c) comprend la transmission 400 de ce message crypté [M]Cp, par exemple sous forme de QR Code, ou via une connexion réseau.
A une étape (d), le dispositif 1 exécute des traitements cryptographiques 500' sur le message M crypté. Dans le présent exemple, le dispositif 1 déchiffre la donnée [M]Cp à l'aide de la clé privée Ck qu'il détient.

## Revendications

1. Procédé de transmission sécurisée hors ligne de données entre un premier dispositif (1) informatique et un deuxième dispositif (2) informatique, le premier dispositif (1) comprenant des moyens d'émission d'un signal analogique (11) et le deuxième dispositif (2) comprenant des moyens d'acquisition du signal analogique (22), le procédé comprenant la mise en oeuvre par un processeur (10) du premier dispositif (1) d'étapes de :
a) génération (200) d'un premier signal analogique (C1) représentatif d'une première donnée cryptographique, la première donnée cryptographique comprenant une clé de chiffrement (Cp),
b) émission (300) du premier signal analogique (C1) via les moyens d'émission d'un signal analogique (11) du premier dispositif (1), à destination des moyens d'acquisition du signal analogique (22) du deuxième dispositif (2),
c) réception (400) d'une deuxième donnée cryptographique (D) depuis le deuxième dispositif (2), la deuxième donnée cryptographique (D) étant au moins en partie chiffrée à l'aide de la clé de chiffrement (Cp),
d) traitement de ladite deuxième donnée cryptographique (D) en fonction de la première donnée cryptographique, ledit traitement comprenant un déchiffrement de la deuxième donnée cryptographique (D).

2. Procédé selon la revendication 1, dans lequel l'étape (a) comprend la génération (100), par le processeur (10) du premier dispositif (1), de la première donnée cryptographique.

3. Procédé selon la revendication 1 ou 2, dans lequel la deuxième donnée cryptographique (D) est un message, ledit message comprenant un secret chiffré à l'aide de la clé de chiffrement (Cp), l'étape (d) de traitement comprenant le déchiffrement (500') dudit secret.

4. Procédé selon l'une des revendications 1 à 3, dans lequel la clé de chiffrement (Cp) est une clé publique associée à une clé privée (Ck), le déchiffrement de la deuxième donnée cryptographique étant réalisé par le premier dispositif (1) à l'aide de la clé privée (Ck).

5. Procédé selon l'une des revendications 1 à 4, dans lequel le premier dispositif (1) et le deuxième dispositif (2) sont des dispositifs mobiles, de préférence des téléphones intelligents dits « smartphones ».

6. Procédé selon l'une des revendications 1 à 5, dans lequel la réception (400) de la deuxième donnée cryptographique (D) comprend la lecture, par des moyens d'acquisition (12) d'un signal analogique compris dans le premier dispositif (1), d'un deuxième signal analogique (C2) représentatif de la deuxième donnée cryptographique (D), ledit deuxième signal analogique étant transmis par des moyens d'émission (21) du signal analogique compris dans le deuxième dispositif (2).

7. Procédé selon l'une des revendications 1 à 6, dans lequel le premier signal analogique (C1) est un premier signal lumineux, de préférence un code « QR Code », ou une stéganographie, ou un code-barres,
les moyens d'émission (11) d'un signal analogique du premier dispositif (1) étant un afficheur, et les moyens d'acquisition (22) du signal analogique du deuxième dispositif (2) étant un imageur

8. Procédé selon la revendication 7, dans lequel l'imageur (22) du deuxième dispositif est situé sur une face avant du deuxième dispositif (2), ledit imageur (22) étant de préférence un appareil photographique en mode autoportrait,
les étapes du procédé de transmission sécurisée de données étant exécutées alors que l'imageur (22) du deuxième dispositif est face à l'afficheur (11) du premier dispositif.

9. Procédé selon l'une des revendications 1 à 6, dans lequel le premier signal analogique (C1) est un signal sonore,
les moyens d'émission (11) d'un signal analogique du premier dispositif (1) étant un transducteur électroacoustique, et les moyens d'acquisition (22) du signal analogique du deuxième dispositif (2) étant un microphone.

10. Procédé selon l'une des revendications 1 à 9, les étapes du procédé étant mises en oeuvre en l'absence de connexion réseau entre le premier dispositif (1) et le deuxième dispositif (2).

11. Dispositif vérifieur (1) comprenant un processeur (10), une mémoire (13) et des moyens d'émission (11) de signal analogique,
le processeur (10) étant configuré pour générer un premier signal analogique (C1) à partir d'une première donnée cryptographique comprenant une clé de chiffrement (Cp) et étant configuré pour exécuter un procédé de transmission sécurisée de données selon l'une des revendications 1 à 10.

12. Dispositif selon la revendication 11, ledit dispositif (1) comportant en outre un dispositif imageur (12), de préférence un appareil photographique en mode autoportrait.

13. Système comprenant un dispositif vérifieur (1) selon l'une des revendications 11 ou 12, et un dispositif client (2),
le dispositif client (2) comprenant un processeur (20), une mémoire (23) et des moyens d'acquisition (22) d'un signal analogique,
le processeur (20) étant configuré pour obtenir à partir du premier signal analogique (C1) la première donnée cryptographique comprenant la clé de chiffrement, et étant configuré en outre pour générer et transmettre au dispositif vérifieur (1) une deuxième donnée cryptographique (D) au moins en partie chiffrée à l'aide de la clé de chiffrement.

14. Produit programme d'ordinateur comprenant des instructions de code pour la mise en oeuvre d'un procédé de transmission sécurisée de données selon l'une des revendications 1 à 10, lorsque lesdites instructions de code sont exécutées par un processeur.

15. Moyens de stockage lisibles par ordinateur, sur lesquels sont préenregistrées des instructions de code pour la mise en oeuvre d'un procédé de transmission sécurisée de données selon l'une des revendications 1 à 10.
